# EUROPÄISCHE PATENTSCHRIFT

(11) **EP 3 492 287 B1**
(45) Veröffentlichungstag und Bekanntmachung des Hinweises auf die Patenterteilung: **25.08.2021**
(21) Anmeldenummer: 18209373.2
(22) Anmeldetag: 30.11.2018
(51) Int. Cl.: B60C 23/00, B60C 23/04

(54) **VORRICHTUNG FÜR DAS MESSEN DES DRUCKS EINES ZWEIRADREIFENS, INSBESONDERE EINES FAHRRADREIFENS**
DEVICE FOR MEASURING THE PRESSURE OF A TYRE FOR A TWO-WHEELED VEHICLE, IN PARTICULAR A BICYCLE TYRE
DISPOSITIF DE MESURE DE LA PRESSION D'UN PNEU DE DEUX ROUES, EN PARTICULIER D'UN PNEU DE BICYCLETTE

(30) Priorität: 30.11.2017 DE 102017128466
(43) Veröffentlichungstag der Anmeldung: 05.06.2019
(73) Patentinhaber: SKS metaplast Scheffer-Klute GmbH, 59846 Sundern (DE)
(72) Erfinder: Kisker, Davor, 58675 Hemer (DE); Beste, Michael, 58809 Neuenrade (DE)
(74) Vertreter: Basfeld, Rainer

(56) Entgegenhaltungen:
- WO-A1-96/36861
- WO-A1-2011/053809
- DE-A1-102014 220 945
- JP-A- 2007 038 993

## Beschreibung

Die vorliegende Erfindung betrifft eine Vorrichtung für das Messen des Drucks eines Zweiradreifens, insbesondere eines Fahrradreifens. Weiterhin betrifft die vorliegende Erfindung eine Kombination einer derartigen Vorrichtung mit einer mobilen Anzeige- und/oder Signaleinrichtung.

Es ist beispielsweise aus der US 5.040,561 bekannt, bei Kraftfahrzeugen Reifenventile zu verwenden, die eine Funkübertragung von den Reifendruck betreffenden Informationen an eine Steuereinheit im Inneren des Kraftfahrzeugs ermöglichen. Dem Fahrer des Kraftfahrzeugs kann somit angezeigt oder signalisiert werden, ob ein Druckverlust im Reifen vorliegt. Das aus dem vorgenannten US-Patent bekannte Ventil ist sehr groß und kompliziert aufgebaut, so dass es sich nicht für den Einsatz an einem Fahrrad eignet und insbesondere an einem Fahrrad auch nicht nachgerüstet werden kann. Weiterhin ist an einem Fahrrad keine eingebaute Steuereinheit vorgesehen, die drahtlos übertragene Informationen verarbeiten und anzeigen kann.

Eine Vorrichtung für das Messen des Drucks eines Zweiradreifens ist aus der DE 10 2014 220 945 A1 bekannt. Die darin beschriebene Vorrichtung ist in eine Handpumpe für das Aufpumpen eines Fahrradreifens integriert. Der Pumpenkopf weist einen Adapter für die Verbindung der Vorrichtung mit dem Ventil eines Zweiradreifens auf. In den Pumpenkopf ist weiterhin ein Sensorbauteil einbaubar, das Druckmessmittel für die Messung des Drucks in der Vorrichtung und Übertragungsmittel für die drahtlose Übertragung der dem gemessenen Druck entsprechenden Information aufweist.

Aus der WO 2011/053809 A1 ist eine Vorrichtung zur Überwachung eines Reifendrucks bekannt, die ein Gehäuse mit einem Anschluss für einen Luftschlauch und einem Anschluss für ein Ventil eines Zweiradreifens aufweist. In dem Gehäuse ist ein Sensorbauteil angeordnet, das Druckmessmittel für die Messung des Drucks in der Vorrichtung und Übertragungsmittel für die drahtlose Übertragung der dem gemessenen Druck entsprechenden Information aufweist.

Auch aus der WO 96/36861 A1 ist eine Vorrichtung zur Überwachung eines Reifendrucks bekannt, die ein Gehäuse mit einem Anschluss für einen Luftschlauch und einem Anschluss für ein Ventil eines Zweiradreifens aufweist. In dem Gehäuse ist ein Sensorbauteil angeordnet, das Druckmessmittel für die Messung des Drucks in der Vorrichtung und Übertragungsmittel für die drahtlose Übertragung der dem gemessenen Druck entsprechenden Information aufweist.

Das der vorliegenden Erfindung zugrunde liegende Problem ist die Schaffung einer Vorrichtung der eingangs genannten Art, mittels der bei einem Zweirad, insbesondere einem Fahrrad, Informationen über den Druck eines Reifens übermittelt werden können, wobei die Vorrichtung insbesondere kostengünstig bei unterschiedlichen Ventilen verwendet werden soll. Weiterhin soll eine Kombination einer derartigen Vorrichtung mit einer mobilen Anzeige- und/oder Signaleinrichtung angegeben werden, die dem Benutzer Informationen über den Druck eines Reifens anzeigen oder signalisieren kann.

Dies wird erfindungsgemäß durch eine Vorrichtung der eingangs genannten Art mit den Merkmalen des Anspruchs 1 sowie eine Kombination mit den Merkmalen des Anspruchs 14 erreicht. Die Unteransprüche betreffen bevorzugte Ausgestaltungen der Erfindung.

Gemäß Anspruch 1 umfasst die Vorrichtung
- eine erste und eine zweite Ausführungsform eines Adapterbauteils, die unterschiedlich zueinander sind und für verschiedene Ventilarten eines Zweirads vorgesehen sind, wobei die Ausführungsformen des Adapterbauteils jeweils Verbindungsmittel für die Verbindung der Vorrichtung mit dem Ventil des Zweiradreifens und Mittel zum Öffnen des Ventils umfassen, so dass im mit dem Ventil verbundenen Zustand aus dem Zweiradreifen durch das Ventil unter Druck stehende Luft in die Vorrichtung hineinströmt, bis der Druck in der Vorrichtung dem Druck in dem Zweiradreifen entspricht,
- ein mit jeder der Ausführungsformen des Adapterbauteils verbindbares Sensorbauteil, das Druckmessmittel für die Messung des Drucks in der Vorrichtung und Übertragungsmittel für die drahtlose Übertragung der dem gemessenen Druck entsprechenden Information umfasst, wobei die für das Ventil des Zweiradreifens geeignete Ausführungsform des Adapterbauteils für die Verbindung mit dem Sensorbauteil ausgewählt werden kann.

Bei der Verwendung einer derartigen Vorrichtung muss kein speziell auf die Übertragung abgestimmtes Ventil verwendet werden. Vielmehr kann die erfindungsgemäße Vorrichtung mit dem bereits am Zweirad beziehungsweise Fahrrad montierten Ventil des Reifens verbunden werden. Dadurch besteht die Möglichkeit, jedes Zweirad beziehungsweise Fahrrad mit derartigen Vorrichtungen nachzurüsten.

Durch das Vorsehen eines von dem Adapterbauteil separaten Sensorbauteils, kann durch die Verwendung unterschiedlicher Adapterbauteile ein und das gleiche Sensorbauteil für verschiedene Ventilarten eines Fahrrads verwendet werden. Insbesondere kann vorgesehen sein, dass die erste Ausführungsform des Adapterbauteils für die Verbindung mit und zum Öffnen von Schraderventilen und/oder Dunlopventilen geeignet ist, wohingegen die zweite Ausführungsform des Adapterbauteils für die Verbindung mit und zum Öffnen von Sclaverandventilen geeignet ist. Wenn die Verwendung der Vorrichtung mit einem Fahrrad mit Schraderventilen vorgesehen ist, wird die erste Ausführungsform des Adapterbauteils ausgewählt und mit dem Sensorbauteil verbunden. Wenn die Verwendung der Vorrichtung mit einem Fahrrad mit Sclaverandventilen vorgesehen ist, wird die zweite Ausführungsform des Adapterbauteils ausgewählt und mit dem Sensorbauteil verbunden.

Es besteht die Möglichkeit, dass das Sensorbauteil das Adapterbauteil im miteinander verbundenen Zustand zumindest teilweise umgibt. Dabei kann vorgesehen sein, dass das Sensorbauteil in mindestens einer ersten Position und in mindestens einer zweiten Position mit dem Adapterbauteil verbunden werden kann, insbesondere in einer Mehrzahl unterschiedlicher Positionen, die sich durch gleiche Winkelabstände voneinander unterscheiden. Dadurch kann das Sensorbauteil geeignet zwischen den Speichen des Rades angeordnet werden.

Es besteht die Möglichkeit, dass die Vorrichtung Dichtmittel umfasst, die das Sensorbauteil und das Adapterbauteil relativ zueinander abdichten. Auf diese Weise wird verhindert, dass die aus dem Ventil des Fahrrads austretende Luft die Vorrichtung verlässt.

Es kann vorgesehen sein, dass das Adapterbauteil einen Kanal umfasst, durch den hindurch die aus dem Zweiradreifen durch das Ventil herausströmende Luft zu dem Sensorbauteil gelangen kann. Dadurch kann gewährleistet werden, dass der in dem Sensorbauteil gemessene Druck zumindest weitgehend dem Druck in dem Zweiradreifen entspricht.

Es besteht die Möglichkeit, dass die Verbindungsmittel ein Innengewinde für eine Schraubverbindung der Vorrichtung mit dem Ventil umfassen. Dadurch ergibt sich eine feste Verbindung zwischen der Vorrichtung und dem Ventil.

Es besteht die Möglichkeit, dass das Adapterbauteil Anschlussmittel für eine Luftpumpe aufweist, so dass mit der Luftpumpe durch die Vorrichtung und das damit verbundene Ventil der Zweiradreifen aufgepumpt werden kann. Dadurch kann sich der Benutzer auch während des Aufpumpens des Reifens beispielsweise auf seinem Smartphone den Luftdruck anzeigen lassen. Er kann dadurch gezielt Einfluss auf den Luftdruck nehmen.

Beispielsweise können dabei die Anschlussmittel für die Luftpumpe auf der von den Verbindungsmitteln abgewandten Seite des Adapterbauteils angeordnet sein. Damit stellt die Vorrichtung geometrisch lediglich eine Verlängerung des Ventils dar, so dass der Benutzer den Reifen wie gewohnt aufpumpen kann.

Es kann vorgesehen sein, dass die Anschlussmittel für die Luftpumpe wie ein Fahrradventil, insbesondere wie ein Schraderventil und/oder Sclaverandventil und/oder Dunlopventil ausgebildet sind. Damit kann über die Vorrichtung mit handelsüblichen Luftpumpen der Reifen aufgepumpt werden.

Es besteht die Möglichkeit, dass die Vorrichtung Feststellmittel umfasst, durch die das Sensorbauteil an dem Adapterbauteil festgelegt werden kann. Dadurch kann ein sicherer Betrieb der Vorrichtung gewährleistet werden.

Insbesondere können dabei die Feststellmittel als auf die Anschlussmittel für die Luftpumpe aufschraubbare Mutter ausgebildet sein. Damit ähneln die Feststellmittel denjenigen, mit denen ein Ventil an dem Rad des Zweirads befestigt werden, so dass die Bedienung der Feststellmittel dem Benutzer vertraut ist.

Es kann vorgesehen sein, dass die Übertragungsmittel Funkübertragungsmittel sind. Insbesondere können die Übertragungsmittel für eine Funkübertragung nach einem Bluetooth-Standard geeignet sein. Dadurch können als Anzeige- und/oder Signaleinrichtungen handelsübliche Smartphones oder Tabletcomputer verwendet werden, die in Regel sämtlich in der Lage sind, Informationsübertragungen nach dem Bluetooth-Standard zu verarbeiten.

Es kann vorgesehen sein, dass die Verbindungsmittel für eine Verbindung mit Schraderventilen und/oder Sclaverandventilen und/oder Dunlopventilen geeignet sind. Auch die Mittel zum Öffnen des Ventils können für das Öffnen von Fahrradventilen, insbesondere von Schraderventilen und/oder Sclaverandventilen und/oder Dunlopventilen geeignet sein. Damit kann eine entsprechend gestaltete Vorrichtung an den meisten, vorzugsweise an sämtlichen, handelsüblichen Fahrradventilen verbaut werden.

Gemäß Anspruch 14 umfasst die Kombination eine erfindungsgemäße Vorrichtung und eine mobilen Anzeige- und/oder Signaleinrichtung, wobei die Anzeige- und/oder Signaleinrichtung Übertragungsmittel für den Empfang der drahtlos übertragenen, dem Druck entsprechenden Information umfasst und Anzeige- und/oder Signalmittel für die Anzeige oder Signalisierung des Drucks oder einer Druckänderung umfasst. Insbesondere kann dabei die Anzeige- und/oder Signaleinrichtung ein Smartphone oder ein Tabletcomputer sein. Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine perspektivische Explosionsansicht einer ersten Ausführungsform einer erfindungsgemäßen Vorrichtung;
- Fig. 2: eine teilweise geschnittene Explosionsseitenansicht der Vorrichtung gemäß Fig. 1 ;
- Fig. 3: eine Detailansicht gemäß dem Pfeil III in Fig. 2;
- Fig. 4: eine Seitenansicht der Vorrichtung gemäß Fig. 1 im zusammengebauten Zustand;
- Fig. 5: eine Schnittansicht der Vorrichtung gemäß Fig. 1 im zusammengebauten Zustand;
- Fig. 6: eine Detailansicht gemäß dem Pfeil VI in Fig. 5;
- Fig. 7: eine teilweise geschnittene Explosionsseitenansicht der Vorrichtung gemäß Fig. 1 mit einem als Schraderventil ausgebildeten Fahrradventil;
- Fig. 8: eine Schnittansicht der Vorrichtung gemäß Fig. 1 mit dem Fahrradventil im zusammengebauten Zustand;
- Fig. 9: eine Detailansicht gemäß dem Pfeil IX in Fig. 8;
- Fig. 10: eine teilweise geschnittene Explosionsseitenansicht einer zweiten Ausführungsform einer erfindungsgemäßen Vorrichtung mit einem als Sclaverandventil ausgebildeten Fahrradventil;
- Fig. 11: eine Schnittansicht der Vorrichtung gemäß Fig. 10 mit dem Fahrradventil im zusammengebauten Zustand;
- Fig. 12: eine Detailansicht gemäß dem Pfeil XII in Fig. 11.

In den Figuren sind gleiche oder funktional gleiche Teile mit gleichen Bezugszeichen versehen.

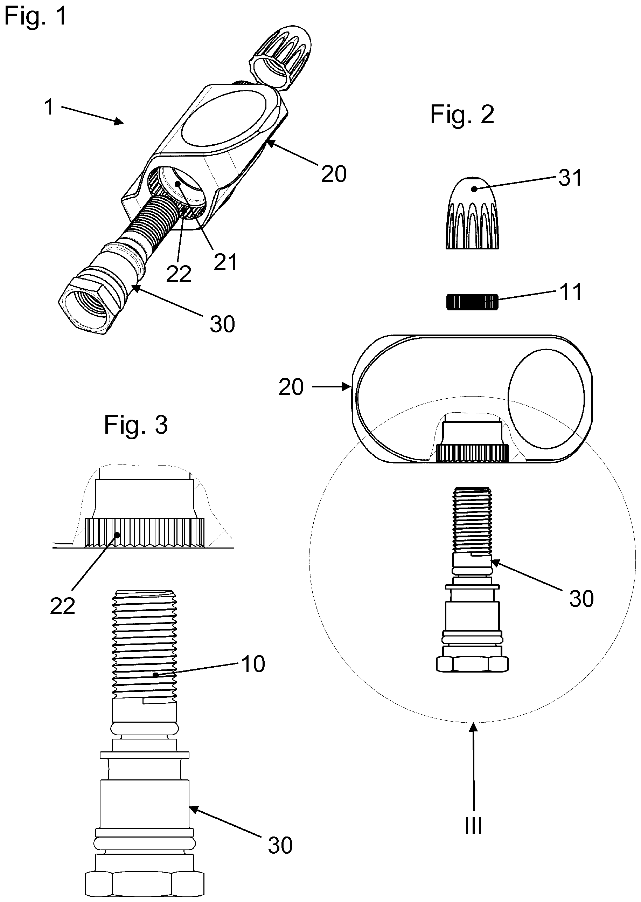

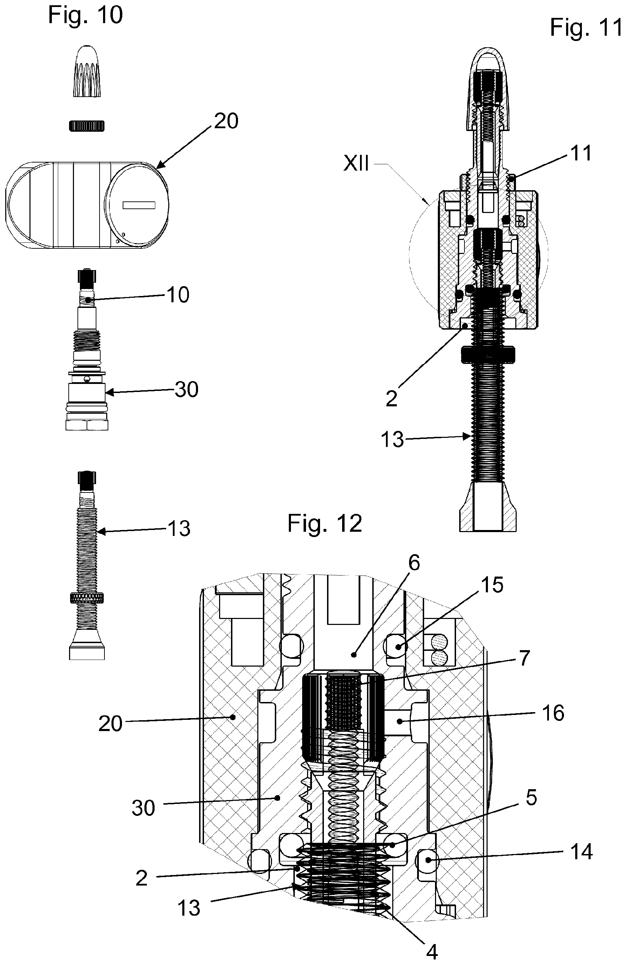

Eine erfindungsgemäße Vorrichtung 1 umfasst ein Sensorbauteil 20 und ein Adapterbauteil 30, die miteinander verbunden werden können. Die aus Fig. 1 bis Fig. 9 ersichtliche erste Ausführungsform des Adapterbauteils 30 ist für die Verbindung mit einem Ventil 3 geeignet, das als Schraderventil oder als Dunlopventil ausgebildet ist. Die aus Fig. 10 bis Fig. 12 ersichtliche zweite Ausführungsform des Adapterbauteils 30 ist für die Verbindung mit einem Ventil 13 geeignet, das als Sclaverandventil ausgebildet ist.

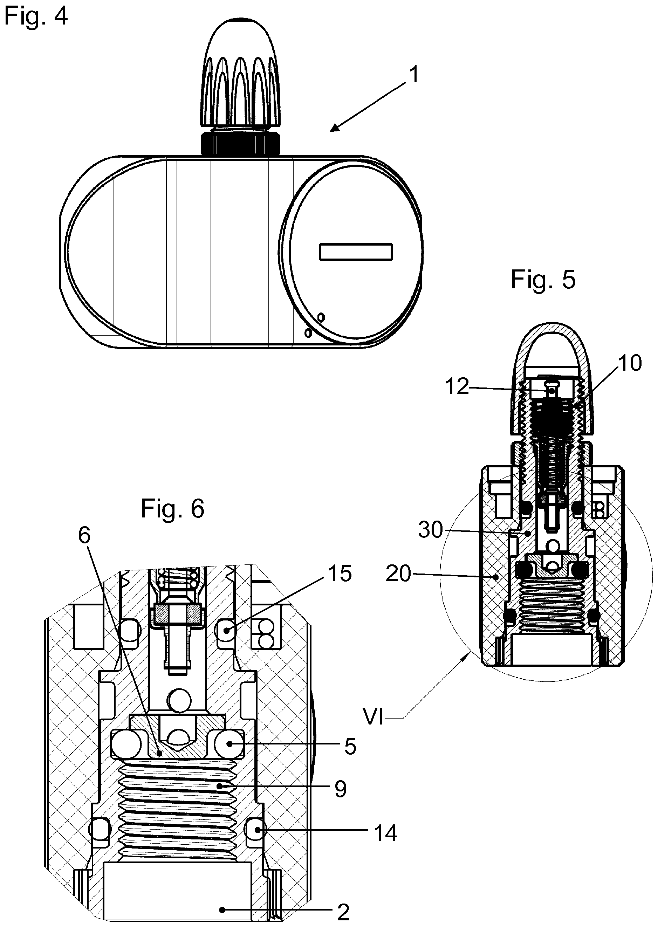

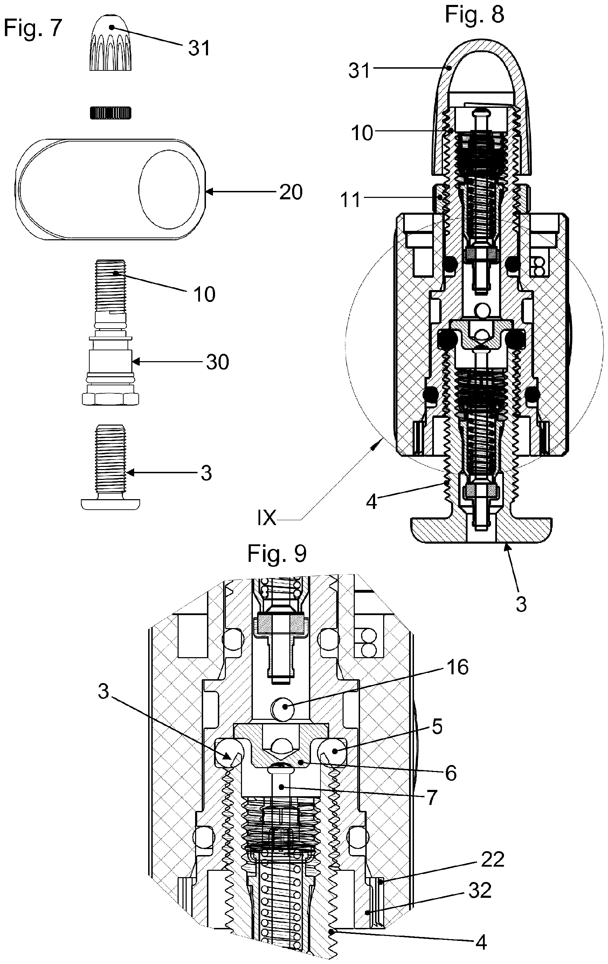

Das Adapterbauteil 30 weist eine Aussparung 2 an der in Fig. 6 unteren Seite auf. In der Aussparung 2 ist ein Innengewinde 9 vorgesehen, das auf das Außengewinde 4 eines Ventils 3 eines Fahrradreifens (siehe Fig. 9) aufgeschraubt werden kann. Die Aussparung 2 mit Innengewinde 9 dient als Verbindungsmittel für die Verbindung mit dem Ventil 3.

In der Aussparung 2 sind weiterhin Dichtmittel 5 in Form eines O-Rings vorgesehen, die stirnseitig an einem Ventil 3 anliegen können. Weiterhin ist bei der abgebildeten ersten Ausführungsform des Adapterbauteils 30 in der Aussparung 2 ein Vorsprung 6 angeordnet, der einen Stift 7 eindrücken kann, der bei einem als Schraderventil ausgeführten Ventil 3 vorgesehen ist (siehe Fig. 9). Durch Eindrücken dieses Stiftes 7 öffnet sich das Ventil 3 in an sich bekannter Weise. Der Vorsprung 6 dient somit, insbesondere zusammen mit dem Innengewinde der Aussparung 2 als Mittel zum Öffnen des Ventils 3.

Die erste Ausführungsform des Adapterbauteils 30 ist somit für das Zusammenwirken mit einem Schraderventil ausgestaltet. Diese erste Ausführungsform des Adapterbauteils 30 ist gleichzeitig für das Zusammenwirken mit einem Dunlopventil geeignet.

Es besteht durchaus auch die Möglichkeit, eine Ausführungsform des Adapterbauteils zu schaffen, die lediglich für das Zusammenwirken mit einem Schraderventil und nicht für das Zusammenwirken mit einem Dunlopventil ausgestaltet ist. Dann könnte zusätzlich eine Ausführungsform geschaffen werden, die für das Zusammenwirken mit einem Dunlopventil ausgestaltet ist.

Bei der zweiten Ausführungsform des Adapterbauteils 30 ist ein vergleichbarer Vorsprung 6 vorgesehen, der den bei einem Sclaverandventil ebenfalls vorgesehenen Stift 7 zum Öffnen des Ventils 13 eindrücken kann (siehe Fig. 12).

Das Sensorbauteil 20 kann auf das Adapterbauteil 30 aufgeschoben werden. Dazu weist das Sensorbauteil 20 eine beidseitig offene, im Wesentlichen hohlzylindrische Aufnahme 21 auf (siehe Fig. 1). Beispielsweise Fig. 5 zeigt, dass das Adapterbauteil 30 so in die Aufnahme 21 eingebracht werden kann, dass es auf der dem Ventil 3, 13 zugewandten Seite bündig mit dem Sensorbauteil abschließt und auf der gegenüberliegenden, in Fig. 5 oberen Seite aus dem Sensorbauteil 20 herausragt.

Auf der der Ausnehmung 2 gegenüberliegenden Seite weist das Adapterbauteil 30 Anschlussmittel 10 für eine Luftpumpe auf. Die Anschlussmittel 10 ragen im verbundenen Zustand von Sensorbauteil 20 und Adapterbauteil 30 nach oben aus dem Sensorbauteil 20 heraus und sind wie ein Ventil eines Fahrrads gestaltet, im in Fig. 1 bis Fig. 9 abgebildeten Ausführungsbeispiel insbesondere wie ein Schraderventil (siehe Fig. 3, Fig. 5 und Fig. 8). Das bedeutet, dass im Inneren der Anschlussmittel 10 ein Stift 12 vorgesehen ist, durch dessen Eindrücken eine Fluidverbindung zu dem Innenraum der Luftpumpe hergestellt werden kann.

Es besteht durchaus die Möglichkeit, die Anschlussmittel 10 so zu gestalten, dass sie wie ein Sclaverandventil oder ein Dunlopventil gestaltet sind. Beispielsweise bei der Ausführungsform gemäß Fig. 10 bis Fig. 12 sind die Anschlussmittel 10 wie ein Sclaverandventil gestaltet.

Die Anschlussmittel 10 stehen mit der Aussparung 2 in Fluidverbindung, so dass mit der Luftpumpe durch die Vorrichtung 1 beziehungsweise das Adapterbauteil 30 und das damit verbundene Ventil 3, 13 der Fahrradreifen 9 aufgepumpt werden kann. Auf die Anschlussmittel 10 ist eine Kappe 31 aufgeschraubt, beispielsweise eine Kappe wie sie üblicherweise auch bei dem adaptierten Ventil 3, 13 Verwendung findet (siehe beispielsweise Fig. 7 und Fig. 8).

Die Aufnahme 21 des Sensorbauteils 20 weist eine innere Strukturierung 22 auf, die mit einer entsprechenden Strukturierung 32 auf der Außenseite des Adapterbauteils 30 zusammenwirkt (siehe Fig. 1, Fig. 3 und Fig. 9). Durch das Ineinandergreifen der Strukturierungen 22, 32 wird gewährleistet, dass das Sensorbauteil 20 nur in vorgegebenen Positionen auf das Adapterbauteil 30 aufbringbar ist. Beispielsweise können die Strukturierungen so gestaltet sein, dass die Winkelabstände zwischen möglichen benachbarten Positionen etwa 10° betragen.

Die Vorrichtung 1 umfasst weiterhin Feststellmittel 11 für die Festlegung des Sensorbauteils 20 an dem Adapterbauteil 30 im zusammengebauten Zustand. Die Feststellmittel 11 sind insbesondere als Mutter ausgebildet und können auf die Verbindungsmittel 10 aufgeschraubt werden bis sie an der Oberseite der Sensormittel 20 anliegen (siehe beispielsweise Fig. 2, Fig. 8 und Fig. 11).

Die Vorrichtung 1 umfasst weiterhin Dichtmittel, die das Sensorbauteil 20 und das Adapterbauteil 30 im zusammengebauten Zustand relativ zueinander abdichten. Die Dichtmittel sind als zwei in axialer Richtung des Adapterbauteils 30 zueinander beabstandete O-Ringe 14, 15 ausgebildet, die in entsprechenden, auf der Außenseite des Adapterbauteils 30 angeordneten Nuten umlaufen (siehe Fig. 6 und Fig. 12).

Die Innenseite des Sensorbauteils 20 liegt an den O-Ringen 14, 15 an. Dadurch ergibt sich auch bereits durch das Aufschieben des Sensorbauteils 20 auf das Adapterbauteil 30 eine vergleichsweise feste Verbindung zwischen dem Sensorbauteil 20 und dem Adapterbauteil 30. Diese wird dann durch die Feststellmittel 11 gesichert.

Zwischen den beiden O-Ringen 14, 15 erstreckt sich von der Ausnehmung 2 ein radialer Kanal 16 durch das Adapterbauteil 30 an dessen Außenseite, so dass die aus dem Ventil 3, 13 austretende Luft zu dem Sensorbauteil 20 gelangen kann (siehe dazu Fig. 9 und Fig. 12).

Das Sensorbauteil 20 umfasst Druckmessmittel, die über den radialen Kanal 16 mit der Aussparung 2 in Fluidverbindung stehen. Damit können die Druckmessmittel den Druck in der Aussparung 2 messen. Dieser Druck in der Aussparung 2 entspricht nach Öffnen des Ventils 3, 13 dem Druck in dem Fahrradreifen, so dass die Druckmessmittel nach entsprechender Verbindung der Vorrichtung 1 mit dem Ventil 3, 13 den Druck in dem Fahrradreifen messen können.

Das Sensorbauteil 20 umfasst weiterhin Übertragungsmittel, die die dem gemessenen Druck entsprechende Information drahtlos übertragen können. Insbesondere handelt es sich um Funkübertragungsmittel die für eine Funkübertragung nach einem Bluetooth-Standard geeignet sind. Von den Übertragungsmitteln kann die Information über die Größe des Drucks beispielsweise an ein Smartphone oder einen Tabletcomputer übertragen werden. Auf diesem kann dann dem Benutzer der Druck angezeigt werden oder bei Abweichung von einem Sollwert beispielsweise optisch oder akustisch signalisiert werden, dass eine Abweichung vorliegt.

Es besteht durchaus die Möglichkeit, andere Übertragungsmittel vorzusehen, die einen anderen Übertragungsstandard verwenden.

## Patentansprüche

1. Vorrichtung (1) für das Messen des Drucks eines Zweiradreifens, insbesondere eines Fahrradreifens, umfassend
- eine erste und eine zweite Ausführungsform eines Adapterbauteils (30), die unterschiedlich zueinander sind und für verschiedene Ventilarten eines Zweirads vorgesehen sind, wobei die Ausführungsformen des Adapterbauteils (30) jeweils Verbindungsmittel für die Verbindung der Vorrichtung (1) mit dem Ventil (3, 13) des Zweiradreifens und Mittel zum Öffnen des Ventils (3, 13) umfassen, so dass im mit dem Ventil (3, 13) verbundenen Zustand aus dem Zweiradreifen durch das Ventil (3, 13) unter Druck stehende Luft in die Vorrichtung (1) hineinströmt, bis der Druck in der Vorrichtung (1) dem Druck in dem Zweiradreifen entspricht,
- ein mit jeder der Ausführungsformen des Adapterbauteils (30) verbindbares Sensorbauteil (20), das Druckmessmittel für die Messung des Drucks in der Vorrichtung (1) und Übertragungsmittel für die drahtlose Übertragung der dem gemessenen Druck entsprechenden Information umfasst, wobei die für das Ventil (3, 13) des Zweiradreifens geeignete Ausführungsform des Adapterbauteils (30) für die Verbindung mit dem Sensorbauteil (20) ausgewählt werden kann.

2. Vorrichtung (1) nach Anspruch 1, **dadurch gekennzeichnet, dass** die erste Ausführungsform des Adapterbauteils (30) für die Verbindung mit und zum Öffnen von Schraderventilen und/oder Dunlopventilen geeignet ist, wohingegen die zweite Ausführungsform des Adapterbauteils (30) für die Verbindung mit und zum Öffnen von Sclaverandventilen geeignet ist.

3. Vorrichtung (1) nach einem der Ansprüche 1 oder 2, **dadurch gekennzeichnet, dass** das Sensorbauteil (20) das Adapterbauteil (30) im miteinander verbundenen Zustand zumindest teilweise umgibt.

4. Vorrichtung (1) nach einem der Ansprüche 1 bis 3, **dadurch gekennzeichnet, dass** das Sensorbauteil (20) in mindestens einer ersten Position und in mindestens einer zweiten Position mit dem Adapterbauteil (30) verbunden werden kann, insbesondere in einer Mehrzahl unterschiedlicher Positionen, die sich durch gleiche Winkelabstände voneinander unterscheiden.

5. Vorrichtung (1) nach einem der Ansprüche 1 bis 4, **dadurch gekennzeichnet, dass** die Vorrichtung Dichtmittel umfasst, die das Sensorbauteil (20) und das Adapterbauteil (30) relativ zueinander abdichten.

6. Vorrichtung (1) nach einem der Ansprüche 1 bis 5, **dadurch gekennzeichnet, dass** das Adapterbauteil (30) einen Kanal (16) umfasst, durch den hindurch die aus dem Zweiradreifen durch das Ventil (3, 13) herausströmende Luft zu dem Sensorbauteil (20) gelangen kann.

7. Vorrichtung (1) nach einem der Ansprüche 1 bis 6, **dadurch gekennzeichnet, dass** die Verbindungsmittel ein Innengewinde (9) für eine Schraubverbindung des Adapterbauteils (30) mit dem Ventil (3, 13) umfassen.

8. Vorrichtung (1) nach einem der Ansprüche 1 bis 6, **dadurch gekennzeichnet, dass** das Adapterbauteil (30) Anschlussmittel (10) für eine Luftpumpe aufweist, so dass mit der Luftpumpe durch die Vorrichtung (1) und das damit verbundene Ventil (3, 13) der Zweiradreifen aufgepumpt werden kann.

9. Vorrichtung (1) nach Anspruch 8, **dadurch gekennzeichnet, dass** die Anschlussmittel (10) für die Luftpumpe auf der von den Verbindungsmitteln abgewandten Seite des Adapterbauteils (30) angeordnet sind.

10. Vorrichtung (1) nach einem der Ansprüche 8 oder 9, **dadurch gekennzeichnet, dass** die Anschlussmittel (10) für die Luftpumpe wie ein Fahrradventil, insbesondere wie ein Schraderventil und/oder Sclaverandventil und/oder Dunlopventil ausgebildet sind.

11. Vorrichtung (1) nach einem der Ansprüche 1 bis 10, **dadurch gekennzeichnet, dass** die Vorrichtung Feststellmittel (11) umfasst, durch die das Sensorbauteil (20) an dem Adapterbauteil (30) festgelegt werden kann.

12. Vorrichtung (1) nach Anspruch 11 in seinem Rückbezug auf einen der Ansprüche 8 bis 10, **dadurch gekennzeichnet, dass** die Feststellmittel (11) als auf die Anschlussmittel (10) für die Luftpumpe aufschraubbare Mutter ausgebildet sind.

13. Vorrichtung (1) nach einem der Ansprüche 1 bis 12, **dadurch gekennzeichnet, dass** die Übertragungsmittel Funkübertragungsmittel sind, die insbesondere für eine Funkübertragung nach einem Bluetooth-Standard geeignet sind.

14. Kombination einer Vorrichtung (1) nach einem der Ansprüche 1 bis 13 mit einer mobilen Anzeige- und/oder Signaleinrichtung, wobei die Anzeige- und/oder Signaleinrichtung Übertragungsmittel für den Empfang der drahtlos übertragenen, dem Druck entsprechenden Information umfasst und Anzeige- und/oder Signalmittel für die Anzeige oder Signalisierung des Drucks oder einer Druckänderung umfasst.

15. Kombination nach Anspruch 14, **dadurch gekennzeichnet, dass** die Anzeige- und/oder Signaleinrichtung ein Smartphone oder ein Tabletcomputer ist.

## Claims

1. Device (1) for measuring the pressure of a tyre for a two-wheeled vehicle, in particular a bicycle tyre, comprising
- a first and a second embodiment of an adapter component (30) which are different from one another and are provided for different types of valves for a bicycle, wherein the embodiments of the adapter component (30) comprise in each case connecting means for connecting the device (1) to the valve (3, 13) of the bicycle tyre and means for opening the valve (3, 13), such that, in the state in which it is connected with the valve (3, 13), compressed air flows out of the bicycle tyre through the valve (3, 13) into the device (1) until the pressure in the device (1) is equal to the pressure in the bicycle tyre,
- a sensor component (20) which can be connected with each of the embodiments of the adapter component (30), which comprises pressure measurement means for measuring the pressure in the device (1) and transmitting means for the wireless transmission of the information corresponding to the measured pressure, wherein the embodiment of the adapter component (30) which is suitable for the valve (3, 13) of the bicycle tyre can be selected for the connection with the sensor component (20).

2. Device (1) according to claim 1, **characterised in that** the first embodiment of the adapter component (30) is suitable for connecting with and for opening Schrader valves and/or Dunlop valves, in contrast to which the second embodiment of the adapter component (30) is suitable for connecting with and for opening Sclaverand valves.

3. Device (1) according to any of claims 1 or 2, **characterised in that** the sensor component (20) at least partially surrounds the adapter component (30) in the state in which they are mutually connected.

4. Device (1) according to any of claims 1 to 3, **characterised in that** the sensor component (20) can be connected with the adapter component (30) in at least one first position and in at least one second position, in particular in a plurality of different positions which differ from one another by means of equal angular distances.

5. Device (1) according to any of claims 1 to 4, **characterised in that** the device comprises sealing means which seal the sensor component (20) and the adapter component (30) relative to one another.

6. Device (1) according to any of claims 1 to 5, **characterised in that** the adapter component (30) comprises a duct (16) through which the air flowing out of the bicycle tyre through the valve (3, 13) can reach the sensor component (20).

7. Device (1) according to any of claims 1 to 6, **characterised in that** the connecting means comprise an inner thread (9) for a screw connection of the adapter component (30) to the valve (3, 13).

8. Device (1) according to any of claims 1 to 6, **characterised in that** the adapter component (30) comprises attachment means (10) for an air pump, such that it is possible to pump up the bicycle tyre using the air pump by means of the device (1) and the valve (3, 13) connected thereto.

9. Device (1) according to claim 8, **characterised in that** the attachment means (10) for the air pump are arranged on the side of the adapter component (30) facing away from the connecting means.

10. Device (1) according to any of claims 8 or 9, **characterised in that** the attachment means (10) for the air pump are formed as a bicycle valve, in particular as a Schrader valve and/or Sclaverand valve and/or Dunlop valve.

11. Device (1) according to any of claims 1 to 10, **characterised in that** the device comprises fixing means (11) by means of which the sensor component (20) can be fixed to the adapter component (30).

12. Device (1) according to claim 11 in its back-reference to any of claims 8 to 10, **characterised in that** the fixing means (11) are formed as a nut which can be screwed onto the attachment means (10) for the air pump.

13. Device (1) according to any of claims 1 to 12, **characterised in that** the transmitting means are radio transmitting means, which are in particular suitable for a radio transmission according to a Bluetooth standard.

14. Combination of a device (1) according to any of claims 1 to 13 with a mobile display and/or signal device, wherein the display and/or signal device comprises transmitting means for the reception of the wirelessly transmitted information corresponding to the pressure and display and/or signal means for displaying or signalling the pressure or a change in pressure.

15. Combination according to claim 14, **characterised in that** the display and/or signal device is a smart phone or a tablet computer.

## Revendications

1. Dispositif (1) pour la mesure de la pression d'un pneu de deux-roues, en particulier d'un pneu de bicyclette, comprenant
- un premier et un second mode de réalisation d'un composant d'adaptateur (30) qui sont différents l'un de l'autre et sont prévus pour différents types de valve d'un deux-roues, dans lequel les modes de réalisation du composant d'adaptateur (30) comprennent respectivement des moyens de liaison pour la liaison du dispositif (1) avec la valve (3, 13) du pneu de deux-roues et des moyens pour l'ouverture de la valve (3, 13) de sorte que dans l'état relié à la valve (3, 13) de l'air se trouvant sous pression s'écoule du pneu de deux-roues par la valve (3, 13) dans le dispositif (1) jusqu'à ce que la pression dans le dispositif (1) corresponde à la pression dans le pneu de deux-roues,
- un composant de capteur (20) pouvant être relié à chacun des modes de réalisation du composant d'adaptateur (30) qui comprend des moyens de mesure de pression pour la mesure de la pression dans le dispositif (1) et des moyens de transmission pour la transmission sans fil de l'information correspondant à la pression mesurée, dans lequel le mode de réalisation approprié à la valve (3, 13) du pneu de deux-roues du composant d'adaptateur (30) peut être sélectionné pour la liaison avec le composant de capteur (20).

2. Dispositif (1) selon la revendication 1, **caractérisé en ce que** le premier mode de réalisation du composant d'adaptateur (30) est approprié à la liaison avec et pour l'ouverture de valves de Schrader et/ou valve Dunlop, alors que le second mode de réalisation du composant d'adaptateur (30) est approprié à la liaison avec et pour l'ouverture de valves Sclaverand.

3. Dispositif (1) selon l'une quelconque des revendications 1 ou 2, **caractérisé en ce que** le composant de capteur (20) entoure au moins partiellement le composant d'adaptateur (30) dans l'état relié entre eux.

4. Dispositif (1) selon l'une quelconque des revendications 1 à 3, **caractérisé en ce que** le composant de capteur (20) peut être relié dans au moins une première position et dans au moins une seconde position au composant d'adaptateur (30), en particulier dans une pluralité de positions différentes qui se distinguent par des distances angulaires identiques l'une de l'autre.

5. Dispositif (1) selon l'une quelconque des revendications 1 à 4, **caractérisé en ce que** le dispositif comprend des moyens étanches qui rendent étanche le composant de capteur (20) et le composant d'adaptateur (30) l'un par rapport à l'autre.

6. Dispositif (1) selon l'une quelconque des revendications 1 à 5, **caractérisé en ce que** le composant d'adaptateur (30) comprend un canal (16), par lequel l'air s'écoulant hors du pneu de deux-roues par la valve (3, 13) peut parvenir au composant de capteur (20).

7. Dispositif (1) selon l'une quelconque des revendications 1 à 6, **caractérisé en ce que** les moyens de liaison comprennent un filet intérieur (9) pour une liaison de vissage du composant d'adaptateur (30) avec la valve (3, 13).

8. Dispositif (1) selon l'une quelconque des revendications 1 à 6, **caractérisé en ce que** le composant d'adaptateur (30) présente des moyens de raccordement (10) pour une pompe à air de sorte que le pneu de deux-roues puisse être gonflé avec la pompe à air par le dispositif (1) et la valve (3, 13) reliée à celle-ci.

9. Dispositif (1) selon la revendication 8, **caractérisé en ce que** les moyens de raccordement (10) pour la pompe à air sont agencés sur le côté éloigné des moyens de liaison du composant d'adaptateur (30).

10. Dispositif (1) selon l'une quelconque des revendications 8 ou 9, **caractérisé en ce que** les moyens de raccordement (10) pour la pompe à air sont réalisés comme une valve de bicyclette, en particulier comme une valve Schrader et/ou une valve Sclaverand et/ou une valve Dunlop.

11. Dispositif (1) selon l'une quelconque des revendications 1 à 10, **caractérisé en ce que** le dispositif comprend des moyens de blocage (11), par lesquels le composant de capteur (20) peut être fixé au composant d'adaptateur (30).

12. Dispositif (1) selon la revendication 11 dans sa référence à une des revendications 8 à 10, **caractérisé en ce que** les moyens de blocage (11) sont réalisés comme écrou vissable sur les moyens de raccordement (10) pour la pompe à air.

13. Dispositif (1) selon l'une quelconque des revendications 1 à 12, **caractérisé en ce que** les moyens de transmission sont des moyens de transmission radio qui sont appropriés en particulier pour une transmission radio selon une norme Bluetooth.

14. Combinaison d'un dispositif (1) selon l'une quelconque des revendications 1 à 13, avec un dispositif d'affichage et/ou de signal mobile, dans laquelle le dispositif d'affichage et/ou de signal comprend des moyens de transmission pour la réception de l'information transmise sans fil, correspondant à la pression et des moyens d'affichage et/ou de signal pour l'affichage ou la signalisation de la pression ou d'une modification de pression.

15. Combinaison selon la revendication 14, **caractérisée en ce que** le dispositif d'affichage et/ou de signal est un Smartphone ou un ordinateur tablette.
